# FASCICULE DE BREVET EUROPEEN

(11) **EP 1 346 489 B1**
(45) Date de publication et mention de la délivrance du brevet: **15.12.2010**
(21) Numéro de dépôt: 01989668.7
(22) Date de dépôt: 27.12.2001
(51) Int. Cl.: H04B 1/707

(54) **DISPOSITIF D'ECHANGE DE DONNEES NUMERIQUES DANS UN SYSTEME CDMA**
VORRICHTUNG ZUM AUSTAUSCHEN VON DIGITALEN DATEN IN EINEM CDMA SYSTEM
DIGITAL DATA EXCHANGE DEVICE IN A CDMA SYSTEM

(30) Priorité: 29.12.2000 FR 0017285
(43) Date de publication de la demande: 24.09.2003
(73) Titulaire: Commissariat à l'Energie Atomique, 75015 Paris (FR)
(72) Inventeur: LATTARD, Didier, F-38680 RENCUREL (FR); VARREAU, Didier, F-38450 SAINT-GEORGES-DE-COMMIERS (FR); PIAGET, Bernard, F-38610 VENON (FR); LAUGEOIS, Marc, F-38000 GRENOBLE (FR)
(74) Mandataire: Small, Gary James
(86) Numéro de dépôt international: PCT/FR2001/004213
(87) Numéro de publication internationale: WO 2002/054611

(56) Documents cités:
- EP-A- 0 727 881
- US-A- 4 984 247
- US-A- 5 978 412
- US-A- 6 097 714

## Description

### Domaine technique

L'invention concerne un dispositif d'échange de données numériques entre une pluralité de sources et au moins un concentrateur dans un système AMRC synchrone ou quasi-synchrone, (système à accès multiples par répartition de codes), technique connue également en anglais par l'abréviation CDMA (pour "Code Division Multiple Access").

Un système AMRC synchrone est composé d'un ensemble d'émetteurs, habituellement appelés "modems", et d'un récepteur, habituellement appelé "concentrateur". La transmission des informations des modems vers le concentrateur se fait à travers une voie dite "montante", et la transmission des informations du concentrateur vers les modems à travers une voie dite "descendante". Plusieurs modems peuvent démarrer une transmission simultanément. Pour que la liaison soit synchrone, il faut que les informations relatives à chaque modem, transmises via la voie montante, arrivent au niveau du concentrateur de manière synchronisée.

Lors de la phase d'émission, un ou plusieurs codes sont alloués à chaque modem afin qu'ils transmettent ses informations avec un débit compatible avec sa demande. Les codes utilisés doivent être orthogonaux entre eux pour que le bruit d'inter-corrélation soit nul quand les codes sont synchronisés. A la réception, le concentrateur décode le signal reçu en utilisant les mêmes codes que ceux des modems afin d'en extraire les informations binaires utiles.

Une réception synchrone des codes émis nécessite l'utilisation d'une horloge indiquant la fréquence d'émission des symboles binaires constituant l'information à transmettre. Cette horloge doit être ajustée sur une horloge de référence prédéterminée. La synchronisation des différents modems consiste alors à déterminer le décalage de chaque code transmis par rapport à l'horloge de référence et à ajuster l'horloge symbole sur l'horloge de référence.

La technique de modulation à étalement de spectre par séquence directe est largement décrite dans la littérature spécialisée. On peut citer à titre d'exemple les ouvrages suivants :
- *"*CDMA Principles of Spread Spectrum Comunication", par Andrew J. VITERBI, Addison-Wesley Wireless Communicatios Series *;*
- *"* Spread Spectrum Comunication", par Marvin K. SIMON et al., vol. I, 1983, Computer Science Press *;*
- *"*Spread Spectrum System", R.C Dixon, John WILEY an Sons*.*

Cette technique est également décrite dans certains articles :
- *"*Direct-Sequence Spread Spectrum with DPSK Modulation and Diversity for Indoor Wireless Communication", publié par Mohsen KAVEHARAD ET Bhaskar RAMAMURTHI dans al revue "IEEE Transactions", vol. Com 35, n°2, Fevrier 1987*.*

Les avantages de la technique à étalement de spectre par séquence directe sont multiples. On peut citer, notamment :
- la discrétion : cette discrétion est liée à l'étalement de l'information transmise sur une large bande de fréquence ; il en résulte une faible densité spectrale de la puissance émise ;
- l'accès multiple : plusieurs liaisons à étalement de spectre par séquence directe peuvent partager la même bande de fréquence en utilisant des séquences pseudo-aléatoires d'étalement orthogonales (codes possédant une fonction d'intercorrélation qui présente du bruit résiduel très faible pour tous les décalages) ;
- une bonne cohabitation avec les communications à bande étroite classique : en effet, la même bande de fréquence peut être partagée par les systèmes utilisant une modulation à bande étroite et ceux qui utilisent une modulation à large bande ; les communication à bande étroite ne voient qu'une légère augmentation du bruit radioélectrique ambiant, d'autant plus faible que la longueur de la séquence sera grande ; les modulations à étalement de spectre opèrent une réjection des modulations à bande étroite grâce à l'opération de corrélation effectuée à la réception ;
- la difficulté d'interception : une transmission à étalement de spectre par séquence directe est difficile à intercepter en raison de la faible densité spectrale et du fait que le récepteur doit connaître la séquence d'étalement pour pouvoir démoduler les données ;
- un excellent comportement dans un environnement multi-trajet : dans ce type d'environnement, la propagation de l'onde radioélectrique s'effectue selon des trajets multiples qui mettent en jeu des phénomènes de réflexion, de diffraction et de diffusion ; en outre, il n'est pas rare qu'il n'y ait plus de trajet direct stable dans le temps entre l'émetteur et le récepteur ; cette propagation par trajet multiple induit des effets parasites qui tendent à dégrader la qualité de la transmission.

Pour obtenir une grande souplesse dans l'allocation de codes, et une grande robustesse du système de transmission vis-à-vis du bruit impulsionnel, il est nécessaire de disposer d'un nombre important de codes d'étalement.

### Etat de la technique

Les dispositifs AMRC disponibles actuellement sur le marché ne permettent pas de générer un grand nombre de codes d'étalement, et la conception d'un circuit capable de remédier à cette limitation est onéreuse et pose des problèmes techniques de fabrication. En effet, les traitements à réaliser par le concentrateur sont complexes et nécessitent une grande quantité d'opérateurs dont le nombre est proportionnel au nombre de codes générés ainsi qu'à leur longueur. En outre, l'augmentation du nombre d'émetteurs fonctionnant simultanément nécessite une plus grande précision de synchronisation du fait de l'augmentation du bruit d'intercorrélation.

On peut citer à titre d'exemple de composants de l'art antérieur :
- le composant HFA 3860 de la société Harris ;
- le composant SC2001 de la société Sirius Communications.

Le circuit HFA 3860 est orienté essentiellement vers une liaison point-à-point et ne comporte pas de ressources spécifiques pour gérer une liaison dans un système CDMA synchrone.

Le composant SC2001 ne permet de traiter que deux codes simultanément. En outre ce circuit ne comporte pas de ressource permettant la gestion des horloges symboles, l'estimation du canal de transmission, la démodulation des codes reçus, le calcul des consignes de décalage d'horloge.

Un but de l'invention est de pallier les inconvénients décrits ci-dessus au moyen d'un dispositif dont l'architecture permet l'utilisation d'un nombre important de codes d'étalement sans affecter la rapidité de traitement.

Ces buts sont atteints au moyen d'un dispositif comportant un nombre n de circuits numériques d'émission/réception montés en parallèle, chaque circuit comportant un émetteur comprenant des moyens pour générer un nombre entier N_{c} de codes destinés à réaliser l'étalement spectral des données à émettre et un récepteur comprenant des moyens pour détecter l'accès de nouvelles sources au canal de transmission du système AMRC et des moyens pour générer des signaux de synchronisation et des signaux de commande de puissance correspondant à chaque nouvelle source détectée.

Selon l'invention chaque récepteur comporte un étage d'entrée, un étage de gestion d'acquisition et un étage de gestion de trafic, ledit étage d'entrée recevant un signal d'horloge rx_ck de fréquence f et fournissant à l'étage de gestion de trafic ce signal d'horloge rx_ck et à l'étage de gestion d'acquisition le signal d'horloge (rx_ck/n) dont la fréquence est f/n de telle sorte que chaque étage de gestion d'acquisition traite un échantillon parmi n échantillons de données reçus.

Selon l'invention, le dispositif comporte en outre un circuit d'aiguillage destiné à orienter vers chaque émetteur, une donnée parmi n données à émettre, un circuit d'addition destiné à réaliser la sommation des signaux à la sortie desdits émetteurs avant l'émission, un premier circuit de calcul destiné à analyser les signaux en sortie des étages de gestion d'acquisition pour déterminer les informations de puissance et de décalage d'horloge, un deuxième circuit de calcul destiné à analyser les signaux en sortie du module de gestion de trafic pour déterminer les données binaires reçues et les informations de décalage d'horloge.

Selon l'invention, chaque étage d'entrée comporte un bloc de mise en forme des signaux reçus, un filtre impulsionnel destiné à limiter le spectre des signaux reçus, un bloc d'échantillonnage des signaux filtrés.

Selon l'invention, chaque émetteur comporte un premier module destiné à générer les codes binaires d'étalement et un deuxième module destiné à générer au moins un signal d'horloge interne pour synchroniser la réception des symboles émis par une source.

Selon l'invention, chaque étage de gestion d'acquisition comporte un premier module de démodulation différentielle, un module de génération d'un signal d'acquisition représentatif des signaux de synchronisation et des signaux de commande de puissance correspondant à chaque nouvelle source d'émission, un module de traitement du signal d'acquisition généré et un premier module de gestion d'horloge.

Selon l'invention, chaque étage de gestion de trafic comporte un module de corrélation des données préalablement traitées avec les codes associées à ces données, un module de démodulation différentielle des données corrélées, un module de calcul destiné à déterminer les signaux de synchronisation et les signaux de commande de puissance correspondant à chaque nouvelle source d'émission détectée.

Selon l'invention, le nombre n de circuits d'émission/réception est égal à quatre et le premier module de génération des codes d'étalement est programmé pour générer 32 (trente deux) codes d'étalement comportant chacun 128 impulsions de durée T_{c}.

Selon l'invention, chaque module de gestion d'acquisition traite un code d'étalement de 128 impulsions.

Selon l'invention, le dispositif comporte un module de visualisation.

D'autres caractéristiques et avantages de l'invention ressortiront de la description qui va suivre, prise à titre d'exemple non limitatif, en référence aux figures annexées dans lesquelles :
- La figure 1 représente un schéma général d'un dispositif selon l'invention ;
- la figure 2 représente un schéma bloc d'un circuit d'émission/réception intégré au dispositif de la figure 1 ;

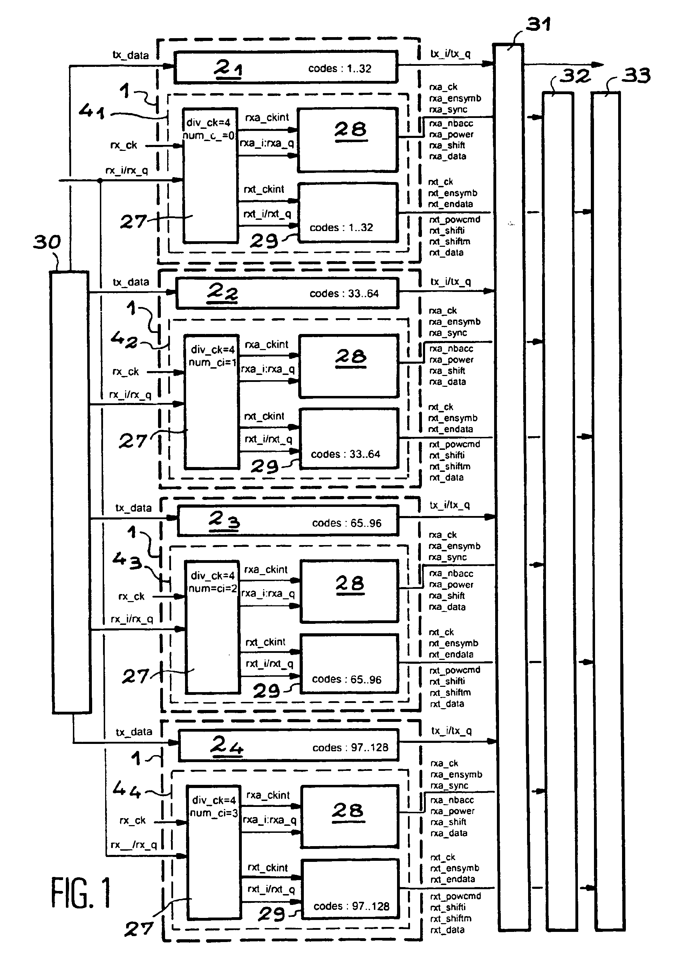

La figure 1 représente un mode préféré de réalisation de l'invention dans lequel un dispositif d'échange de données numériques dans un système AMRC entre une pluralité de sources et au moins un concentrateur comporte quatre circuits numériques 1 d'émission/réception montés en parallèle, chaque circuit 1 comportant un émetteur 2ᵢ et un récepteur 4ᵢ.

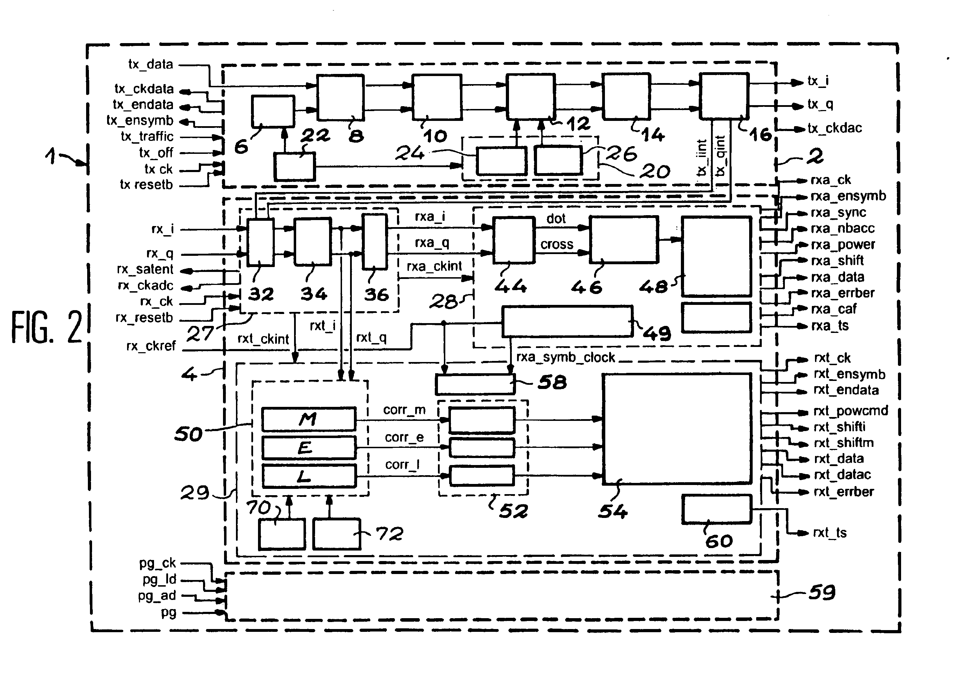

En référence à la figure 2, chaque émetteur 2ᵢ comporte un module d'entrée de données 6, monté en cascade avec un bloc de parallélisation des données 8, un bloc de modulation différentielle 10, un bloc d'étalement 12, un bloc de sommation 14 et un premier filtre d'impulsion 16.

Un premier module 20 fournit au bloc d'étalement 12 trente deux codes binaires pour réaliser l'étalement des symboles à émettre et un deuxième module 22 génère un signal d'horloge interne. Le premier module 20 comporte une table 24 comportant une pluralité de codes et un masque 26 d'allocation de codes qui permet de sélectionner les codes utilisés au niveau de l'émetteur 2. Le débit binaire de l'émetteur 2 est directement lié au nombre de codes validés dans le masque 26.

Le récepteur 4 comporte un étage d'entrée 27, un étage de gestion d'acquisition 28 et un étage de gestion de trafic 29.

Pour assurer la parallélisation, un circuit d'aiguillage 30 (figure 1) oriente vers chaque émetteur 2ᵢ une donnée parmi n données à émettre, un circuit d'addition 31 réalise la sommation des signaux à la sortie desdits émetteurs 2ᵢ avant l'émission, un premier circuit de calcul 32 analyse les signaux en sortie des étages de gestion d'acquisition pour déterminer les informations de puissance et de décalage d'horloge, un deuxième circuit de calcul 33 analyse les signaux en sortie du module de gestion de trafic 29 pour déterminer les données binaires reçues et les informations de décalage d'horloge.

L'étage d'entrée 27 (figure 2) comporte un bloc de mise en forme 32 des signaux reçus, un filtre impulsionnel 34 destiné à limiter le spectre des signaux reçus, un étage d'échantillonnage 36 des signaux filtrés. Cet étage d'entrée 27 transmet, d'une part, les données en bande de base préalablement traitées (rxa_i, rxa_q), à l'étage de gestion d'acquisition 28 qui en extrait les informations de puissance et de décalage temporel des symboles reçus par rapport à l'horloge de base (rx_ckref) du récepteur 4, et d'autre part, les données (rxt_i, rxt_q) à l'étage de gestion de trafic 29 qui en extrait les données binaires transmises et les informations de puissance et de décalage temporel des symboles reçus par rapport à l'horloge de base (rx₌ckref) du récepteur 4.

L'étage d'entrée 27 reçoit un signal d'horloge rx_ck de fréquence f et fournit à l'étage de gestion de trafic 29 ce signal d'horloge rx_ck et à l'étage de gestion d'acquisition 28 le signal d'horloge (rx_ck/n) dont la fréquence est f/4. Ainsi, chaque étage de gestion d'acquisition 28 traite un échantillon de données reçues sur quatre.

L'étage de gestion d'acquisition 28 comporte un premier module de démodulation différentielle 44, un module de génération d'un signal d'acquisition 46 et un module 48 de traitement du signal généré. Le traitement réalisé par le module 48 permet de détecter l'accès de nouvelles sources au canal de transmission et de générer des signaux de synchronisation et des signaux de commande de puissance correspondant à chaque nouvelle source détectée. Un premier bloc de gestion d'horloge symbole locale 49 permet le recalage des nouvelles sources d'émission détectées sur l'horloge de base du récepteur 4 (rx_ckref).

L'étage de gestion de trafic 29 comporte un étage de corrélation 50 comportant une première voie M, une deuxième voie E et une troisième voie L. Les voies M, E et L transmettent des données corrélées respectivement corr_m, corr_e et corr_l à un deuxième étage de démodulation différentielle 52 qui transmet les données démodulées à un étage de calcul 54 destiné à déterminer les signaux de synchronisation et les signaux de commande de puissance correspondant à chaque nouvelle source d'émission détectée. Un deuxième bloc de gestion d'horloge 58 permet de récupérer le signal d'horloge généré par le premier bloc de gestion d'horloge 49.

Un module de programmation 59 accessible via une interface simple comportant un bus d'adresses et un bus de données permet de programmer les paramètres de fonctionnement des émetteurs 2ᵢ et des récepteurs 4ᵢ.

Dans le mode de réalisation illustré par la figure 2, l'étage de corrélation 50 comporte un banc de trente deux corrélateurs glissants qui réalisent les corrélations entre les informations bande de base après mise en forme rxt_i et rxt_q et les séquences de trafic fournies par une table de codes 70 et un module de masquage 72. La longueur maximale des séquences de corrélation est de 128 chips.

Chaque émetteur 2i peut être programmé soit en mode ACQUISITION, soit en mode TRAFIC et les récepteurs 4i gèrent en parallèle les communication en cours et les nouveaux accès.

Lors de l'émission, quatre formats de modulation peuvent être utilisés lors de l'émission : BPSK (pour "Binary Phase Shift Keying" en anglais) DBPSK (pour "Differential Binary Phase Shift Keying" en anglais), QPSK (pour "Quaternary Phase Shift Keying" en anglais), DQPS (pour "Differential Quaternary Phase Shift Keying" en anglais). Les modulations BPSK et QPSK sont accessibles par programmation. En QPSK, deux bits utiles par symbole et par code sont transmis, ce qui nécessite de regrouper les données entrantes par paquets de deux bits "I" et "Q". En BPSK, un seul bit utile est transmis par symbole et par code. Les données entrantes sont recopiées sur I et Q, donc dans le reste de la chaîne d'émission, tout se passe comme si la modulation était QPSK.

La modulation PSK de base peut être transformée en modulation DPSK par un processus d'encodage différentiel par simple programmation. Les données binaires groupées en symboles de deux bits sont codées différentiellement suivant la norme IEEE 802.11 et DVB.

La figure 2 montre les entrées et sorties relatives à l'émetteur 2 :
- Avec l'extérieur,
   - tx_ck : horloge de base de l'émetteur 2 ;
   - tx_resetb : commande l'initialisation ;
   - tx_off : commande d'interruption de la transmission ;
   - tx_trafic : commande du mode trafic ou acquisition ;
   - tx_data : entrée des données binaires ;
   - tx_ensymb : commande la validation des symboles ;
   - tx_endata : commande la validation des données ;
   - tx_ckdac : horloge échantillon pour les convertisseurs analogiques-numériques ;
   - tx_i : sortie de l'émetteur voie I ,
   - tx_q : sortie de l'émetteur voie Q.
- Avec l'étage d'entrée du récepteur 4,
   - tx_iint : rebouclage interne de la sortie de l'émetteur voie I ;
   - tx_qint : rebouclage interne de la sortie de l'émetteur voie Q.

A la réception, l'étage d'entrée 27 réalise la mise en forme des signaux bande de base et les transmet à l'étage d'acquisition 28 et à l'étage de trafic 29.

Les fonctions de base de l'étage d'entrée 27 sont :
- la gestion des horloges ;
- la génération des horloges pour l'étage de gestion d'acquisition 28 et l'étage gestion de trafic 29 ;
- la mise en forme des signaux bande de base ;
- le filtrage des impulsions ;
- l'échantillonnage des signaux filtrés et le transfert aux étages de gestion d'acquisition 28 et de trafic 29, des signaux traités et des signaux d'horloge.

Les entrées et sorties relatives à cet étage sont :
- Avec l'extérieur
   - rx_ck : horloge de base du récepteur 4,
   - rx_resetb : remise à zéro pour l'initialisation,
   - rx_i : entrée du récepteur 4 voie I,
   - rxq : entrée du récepteur 4 voie Q,
   - rx_ckadc : horloge échantillon pour les convertisseurs analogiques-numériques,
   - rx_satent : saturation dans la mise en forme des données entrantes.
- Avec l'émetteur 2
   - tx_iint : rebouclage interne de la sortie de l'émetteur 2 voie I,
   - txqint : rebouclage interne de la sortie de l'émetteur 2 voie Q.
- Avec l'étage d'acquisition 28,
   - rxa_ckint : horloge de base de l'étage d'acquisition 28,
   - rxa_i : information bande de base de la voie I,
   - rxa_q : information bande de base de la voie Q.
- Avec l'étage de gestion de trafic 29,
   - rxt_ckint : horloge de base de l'étage de gestion de trafic 29,
   - rxt_i : information bande de base de la voie I,
   - rx_tq : information bande de base de la voie Q.

En fonctionnement, chaque émetteur 2ᵢ est programmé pour générer trente deux codes d'étalement différents des codes des autres émetteurs. La durée maximale des codes générés est égale à 128 fois la durée d'un chips. Un chips étant un état binaire, "0" ou "1", de durée élémentaire T_{c}. Les données binaires devant être codées avec les séquences successives de trente deux codes générés sont présentées respectivement aux entrées du premier émetteur 2₁, du deuxième émetteur 2₂, du troisième émetteur 2₂, et du quatrième émetteur 2₄.

L'étage d'entrée 27 effectue une division par quatre de la fréquence de l'horloge de référence rx_ref et fournit aux émetteurs 2₁ à 2₄ un signal d'horloge rx_ref/4 de fréquence f/4. Cette fonction de division étant réalisée par programmation de la fréquence f et du nombre n. Un numéro est affecté à chaque circuit 1 pour permettre l'aiguillage des données par le circuit d'aiguillage 30.

Un suréchantillonnage du signal reçu au niveau de l'étage d'entrée 27 permet à chaque circuit 1 de traiter un code d'étalement de longueur 128 chips avec huit échantillons par chips. Le circuit qui émet la valeur la plus grande au niveau de l'information de puissance, traite obligatoirement l'échantillon le plus central dans le chips. Le décalage d'horloge qu'il produit est utilisé pour ajuster l'émetteur correspondant, le facteur de division d'horloge et le numéro du circuit sont intégrés dans le calcul de décalage de telle sorte que la consigne de décalage produite soit directement utilisable par l'émetteur. Chaque circuit de gestion d'acquisition comporte un circuit programmable de recherche de maximum sur les quatre informations de puissance produites par les quatre circuits 1.

## Revendications

1. Dispositif d'échange de données numériques dans un système AMRC entre une pluralité de sources et au moins un concentrateur, **caractérisé en ce qu'**il comporte un nombre n de circuits numériques (1) d'émission/réception montés en parallèle, chaque circuit (1) comportant un émetteur (2ᵢ) comprenant des moyens pour générer un nombre entier N_{c} de codes destinés à réaliser l'étalement spectral des données à émettre et un récepteur (4i) comprenant des moyens (46, 48) pour détecter l'accès de nouvelles sources au canal de transmission du système AMRC et des moyens (49) pour générer des signaux de synchronisation et des signaux de commande de puissance correspondant à chaque nouvelle source détectée.

2. Dispositif selon la revendication 1, **caractérisé en ce que** chaque récepteur (4) comporte un étage d'entrée (27), un étage de gestion d'acquisition (28) et un étage de gestion de trafic (29), ledit étage d'entrée (27) recevant un signal d'horloge de base rx_ck de fréquence f et fournissant à l'étage de gestion de trafic (29) ce signal d'horloge rx_ck et à l'étage de gestion d'acquisition (28) le signal d'horloge(rx_ck/n) de fréquence est f/n de telle sorte que chaque étage de gestion d'acquisition (28) traite un échantillon parmi n échantillons de données reçues.

3. Dispositif selon la revendication 2, **caractérisé en ce qu'**il comporte en outre un circuit d'aiguillage (30) destiné à orienter vers un émetteur (2i) une donnée parmi n données à émettre, un circuit d'addition destiné à réaliser la sommation des signaux à la sortie desdits émetteurs (2i) avant l'émission, un premier circuit de calcul destiné à analyser les signaux en sortie des étages de gestion d'acquisition (28) pour déterminer les informations de puissance et de décalage d'horloge, un deuxième circuit de calcul destiné à analyser les signaux en sortie du module de gestion de trafic (29) pour déterminer les données binaires reçues et les informations de décalage d'horloge.

4. Dispositif selon la revendication 1, **caractérisé en ce** chaque récepteur (4ᵢ) comporte un étage d'entrée (27) et chaque étage d'entrée (27) comporte un bloc (32) de mise en forme des signaux reçus, un filtre impulsionnel (34) destiné à limiter le spectre des signaux reçus, un bloc d'échantillonnage (36) des signaux filtrés.

5. Dispositif selon la revendication 1, **caractérisé en ce que** chaque émetteur (2i) comporte un premier module (20) destiné à générer les N_{c} codes binaires d'étalement et un deuxième module (22) destiné à générer au moins un signal d'horloge interne pour synchroniser la réception des symboles émis par une source.

6. Dispositif selon la revendication 3, **caractérisé en ce que** chaque étage de gestion d'acquisition (28) comporte un premier module (44) de démodulation différentielle, un module (46) de génération d'un signal d'acquisition représentatif des signaux de synchronisation et des signaux de commande de puissance correspondant à chaque nouvelle source d'émission, un module (48) de traitement du signal d'acquisition généré et un premier module de gestion d'horloge (49).

7. Dispositif selon la revendication 3, **caractérisé en ce que** chaque étage de gestion de trafic (29) comporte un module(50) de corrélation des données préalablement traitées avec les codes associées à ces données, un deuxième module (52) de démodulation différentielle des données corrélées, un module (54) de calcul destiné à déterminer les signaux de synchronisation et les signaux de commande de puissance correspondant à chaque source d'émission.

8. Dispositif selon la revendication 5, **caractérisé en ce** le nombre n de circuits d'émission/réception est égal à quatre et le nombre N_{c} de codes d'étalement est égal à 32.

9. Dispositif selon la revendication 8, **caractérisé en ce que** chaque code d'étalement comporte 128 impulsions.

10. Procédé d'échange de données entre des sources et au moins un concentrateur dans un système AMRC, ledit procédé comprenant :
la génération de n groupes de codes destinés à réaliser l'étalement spectral des données pour transmission, où *n* et *N_{c}* sont des nombres entiers, chaque groupe comprenant *N_{c}* codes différents des *N_{c}* codes dans tout autre groupe ; et
la génération d'au moins un signal de synchronisation et d'au moins un signal de commande de puissance pour au moins une source accédant à un canal de transmission dudit système AMRC, l'étape de génération comportant :
la génération d'un signal d'horloge de base de fréquence *f* ;
la génération d'un deuxième signal d'horloge de fréquence *f*/*n* ;
l'extraction d'informations de puissance et de décalage d'horloge d'une donnée reçue sur *n* en réponse à au moins le deuxième signal d'horloge ; et
l'extraction de données binaires et d'informations de décalage d'horloge supplémentaires de données reçues en réponse à au moins le signal d'horloge de base.

11. Procédé selon la revendication 10, comprenant en outre l'orientation de données pour transmission à chacun des *n* groupes de codes et la sommation de *n* signaux étalés spectralement pour la transmission dans le système AMRC.

## Claims

1. Device for exchanging digital data in a CDMA system between a plurality of sources and at least one concentrator, **characterized in that** it comprises a number n of digital transceiver circuits (1) connected in parallel, each circuit (1) comprising a transmitter (2ᵢ) including means for generating an integer number N_{c} of codes intended to produce the spread spectrum for the data to be transmitted and a receiver (4ᵢ) including means (46, 48) for detecting access from new sources to the transmission channel of the CDMA system and means (49) for generating synchronization signals and power control signals corresponding to each new source detected.

2. Device according to Claim 1, **characterized in that** each receiver (4) comprises an input stage (27), an acquisition management stage (28) and a traffic management stage (29), said input stage (27) receiving a basic clock signal rx_ck of frequency f and supplying this clock signal rx_ck to the traffic management stage (29) and the clock signal (rx_ck/n) of frequency fₙ to the acquisition management stage (28) so that each acquisition management stage (28) processes one sample out of n data samples received.

3. Device according to Claim 2, **characterized in that** it also comprises a switching circuit (30) intended to direct one datum out of n data to be transmitted to a
transmitter (2ᵢ), an addition circuit intended to aggregate the signals at the output of said transmitters (2ᵢ) before transmission, a first computation circuit intended to analyse the signals at the output of the acquisition management stage (28) in order to determine the power and clock offset information, a second computation circuit intended to analyse the signals at the output of the traffic management module (29) in order to determine the binary data received and the clock offset information.

4. Device according to Claim 1, **characterized in that** each receiver (4ᵢ) comprises an input stage (27) and each input stage (27) comprises a block (32) for forming the signals received, a pulse filter (34) intended to limit the spectrum of the signals received, a sampling block (36) for the filtered signals.

5. Device according to Claim 1, **characterized in that** each transmitter (2ᵢ) comprises a first module (20) intended to generate the N_{c} binary spreading codes and a second module (22) intended to generate at least one internal clock signal in order to synchronize the reception of the signals transmitted by a source.

6. Device according to Claim 3, **characterized in that** each acquisition management stage (28) comprises a first differential demodulation module (44), a module (46) for generating an acquisition signal representative of the synchronization signals and of the power control signals corresponding to each new transmission source, a module (48) for processing the acquisition signal generated and a first clock management module (49).

7. Device according to Claim 3, **characterized in that** each traffic management stage (29) comprises a module (50) for correlating data previously processed with the codes associated with these data, a second module (52) for differentially demodulating the correlated data, a computation module (54) intended to determine the synchronization signals and the power control signals corresponding to each transmission source.

8. Device according to Claim 5, **characterized in that** the number n of transceiver circuits is equal to four and the number N_{c} of spreading codes is equal to 32.

9. Device according to Claim 8, **characterized in that** each spreading code comprises 128 pulses.

10. Method for exchanging data between sources and at least one concentrator in a CDMA system, said method comprising:
the generation of n groups of codes intended to produce the spread spectrum for the data for transmission, in which *n* and *N_{c}* are integer numbers, each group comprising *N_{c}* codes that are different from the *N_{c}* codes in any other group; and
the generation of at least one synchronization signal and at least one power control signal for at least one source accessing a transmission channel of said CDMA system, the generation step comprising:
the generation of a basic clock signal of frequency *f*;
the generation of a second clock signal of frequency *f*/*n*;
the extraction of power and clock offset information for one datum received out of *n* in response to at least the second clock signal; and
the extraction of binary data and of additional clock offset information for data received in response to at least the basic clock signal.

11. Method according to Claim 10, further comprising the orientation of data for transmission to each of the *n* groups of codes and the aggregation of *n* spectrally spread signals for transmission in the CDMA system.

## Patentansprüche

1. Vorrichtung zum Austauschen von digitalen Daten in einem CDMA-System zwischen einer Vielzahl von Quellen und mindestens einem Hub, **dadurch gekennzeichnet, dass** sie eine Anzahl n von parallel angeschlossenen digitalen Schaltungen (1) zum Senden/Empfangen aufweist, wobei jede Schaltung (1) einen Sender (2ᵢ), der Mittel zum Erzeugen einer ganzen Zahl N_{c} von Codes umfasst, die dazu bestimmt sind, eine Spektralspreizung der Sendedaten zu realisieren, und einen Empfänger (4ᵢ) aufweist, der Mittel (46, 48) zum Detektieren des Zugriffs von neuen Quellen auf den Übertragungskanal des CDMA-Systems und Mittel (49) zum Erzeugen von Synchronisationssignalen und von Leistungssteuersignalen umfasst, die jeder neuen erkannten Quelle entsprechen.

2. Vorrichtung nach Anspruch 1, **dadurch gekennzeichnet, dass** jeder Empfänger (4) eine Eingangsstufe (27), eine Erfassungsverwaltungsstufe (28) und eine Verkehrsverwaltungsstufe (29) aufweist, wobei die Eingangsstufe (27) ein Basistaktsignal rx_ck der Frequenz f empfängt und das Taktsignal rx_ck an die Verkehrsverwaltungsstufe (29) und das Taktsignal (rx_ck/n) der Frequenz f/n an der Erfassungsverwaltungsstufe (28) liefert, derart, dass jede Erfassungsverwaltungsstufe (28) eine Probe aus n Proben von empfangenen Daten verarbeitet.

3. Vorrichtung nach Anspruch 2, **dadurch gekennzeichnet, dass** sie zusätzlich eine Verzweigungsschaltung (30), die dazu bestimmt ist, ein Datum aus n zu sendenden Daten zu einem Sender (2ᵢ) zu lenken, eine Additionsschaltung, die dazu bestimmt ist, die Summierung von Signalen am Ausgang der Sender (2ᵢ) vor dem Senden zu realisieren, eine erste Rechenschaltung, die dazu bestimmt ist, die Signale am Ausgang der Erfassungsverwaltungsstufen (28) zum Bestimmen der Leistungsinformationen und der Taktdiskrepanzinformationen zu analysieren, und eine zweite Rechenschaltung aufweist, die dazu bestimmt ist, die Signale am Ausgang des Verkehrsverwaltungsmoduls (29) zum Bestimmen der empfangenen binären Daten und der Taktdiskrepanzinformationen zu analysieren.

4. Vorrichtung nach Anspruch 1, **dadurch gekennzeichnet, dass** jeder Empfänger (4ᵢ) eine Eingangsstufe (27) aufweist und jede Eingangsstufe (27) einen Aufbereitungsblock (32) für die empfangenen Signale, einen Impulsfilter (34), der dazu bestimmt ist, das Spektrum der empfangenen Signale zu beschränken, und einen Probennahmeblock (36) der gefilterten Signale aufweist.

5. Vorrichtung nach Anspruch 1, **dadurch gekennzeichnet, dass** jeder Sender (2ᵢ) ein erstes Modul (20), das dazu bestimmt ist, die N_{c} binären Spreizcodes zu erzeugen, und ein zweites Modul (22) aufweist, das dazu bestimmt ist, mindestens ein internes Taktsignal zum Synchronisieren des Empfangs von Symbolen zu erzeugen, die von einer Quelle ausgesendet werden.

6. Vorrichtung nach Anspruch 3, **dadurch gekennzeichnet, dass** jede Erfassungsverwaltungsstufe (28) ein erstes differenzielles Demodulationsmodul (44), ein Erzeugungsmodul (46) für ein Erfassungssignal, das für die Synchronisationssignale und die Leistungssteuersignale repräsentativ ist, die jeder neuen Sendequelle entsprechen, ein Bearbeitungsmodul (48) für das erzeugte Erfassungssignal und ein erstes Taktverwaltungsmodul (49) aufweist.

7. Vorrichtung nach Anspruch 3, **dadurch gekennzeichnet, dass** jede Verkehrsverwaltungsstufe (29) ein Korrelationsmodul (50) für Daten, die vorher mit den Codes verarbeitet werden, die diesen Daten zugeordnet sind, ein zweites differenzielles Demodulationsmodul (52) für die korrelierten Daten und ein Berechnungsmodul (54) aufweist, das dazu bestimmt ist, die Synchronisationssignale und die Leistungssteuersignale zu bestimmen, die jeder Sendequelle entsprechen.

8. Vorrichtung nach Anspruch 5, **dadurch gekennzeichnet, dass** die Anzahl n von Sende-/Empfangsschaltungen vier und die Anzahl N_{c} der Spreizcodes 32 ist.

9. Vorrichtung nach Anspruch 8, **dadurch gekennzeichnet, dass** jeder Spreizcode 128 Impulse umfasst.

10. Verfahren zum Austausch von Daten zwischen Quellen und mindestens einem Hub in einem CDMA-System, wobei das Verfahren umfasst:
die Erzeugung von n Codegruppen, die dazu bestimmt sind, eine Spektralspreizung von Daten für eine Übertragung zu realisieren, wobei *n* und *N_{c}* ganze Zahlen sind und jede Gruppe *N_{c}* Codes umfasst, die sich von *N_{c}* Codes in jeder anderen Gruppe unterscheiden; und
die Erzeugung mindestens eines Synchronisationssignals und mindestens eines Leistungssteuersignals für mindestens eine Quelle, die Zugang zu einem Übertragungskanal des CDMA-Systems hat, wobei der Schritt des Erzeugens umfasst:
die Erzeugung eines Basistaktsignals der Frequenz *f*;
die Erzeugung eines zweiten Taktsignals der Frequenz *fln*;
das Extrahieren von Leistungsinformationen und Taktdiskrepanzinformationen eines empfangenen Datums auf *n* als Antwort auf mindestens das zweite Taktsignal; und
das Extrahieren von binären Daten und zusätzlichen Taktdiskrepanzinformationen zu den empfangenen Daten als Antwort auf mindestens das Basistaktsignal.

11. Verfahren nach Anspruch 10, das ferner das Lenken von Daten für die Übertragung in jeder der *n* Codegruppen und das Summieren von *n* Signalen aufweist, die für die Übertragung in dem CDMA-System gespreizt werden.
